# EUROPEAN PATENT APPLICATION

(11) **EP 4 811 799 A1**
(43) Date of publication of application: **23.09.2026**
(21) Application number: 23959923.6
(22) Date of filing: 30.11.2023
(51) Int. Cl.: H04N 21/43

(54) **VIDEO TRANSMISSION METHOD AND DEVICE**

(71) Applicant: Huawei Technologies Co., Ltd., Shenzhen, Guangdong 518129 (CN)
(72) Inventor: HE, Jianhong, Shenzhen, Guangdong 518129 (CN); ZHOU, Weiguang, Shenzhen, Guangdong 518129 (CN); QI, Jian, Shenzhen, Guangdong 518129 (CN); QIAO, Houcai, Shenzhen, Guangdong 518129 (CN)
(74) Representative: Thun, Clemens
(86) International application number: PCT/CN2023/135731
(87) International publication number: WO 2025/112012

(57) **Abstract**

A video transmission method and device are provided, and relate to the field of media technologies, so that a low latency mode can be dynamically enabled for video data, thereby reducing a display delay of a video on a sink device. The method is applied to a source device or a chip in the source device. The method includes: querying a capability of a sink device; and transmitting a first vertical blanking packet VBP and first video data to the sink device when the sink device has an auto low latency capability, where an auto low latency field included in the first VBP is a first value, and the first value indicates enablement of an auto low latency mode for the first video data.

## Description

### TECHNICAL FIELD

This application relates to the field of media technologies, and in particular, to a video transmission method and device.

### BACKGROUND

With the development of big data (big data), artificial intelligence (artificial intelligence, AI), and cloud computing technologies, various types of multimedia data emerge continuously, leading to increasing requirements on transmission performance of multimedia data between different devices. Video data is used as an example. In some scenarios, a display delay of the video data on a display device is required to be as low as possible. Therefore, how to implement low-latency display of video data still faces many challenges.

### SUMMARY

This application provides a video transmission method and device, so that a low latency mode can be dynamically enabled for video data, thereby reducing a display delay of a video on a sink device.

The following technical solutions are used in this application.

According to a first aspect, this application provides a video transmission method, applied to a source device or a chip in the source device, where the method includes: querying a capability of a sink device; and transmitting a first vertical blanking packet VBP and first video data to the sink device when the sink device has an auto low latency capability, where an auto low latency field included in the first VBP is a first value, and the first value indicates enablement of an auto low latency mode for the first video data.

In this application, when the source device detects that the sink device has the auto low latency capability, the source device may include, in the VBP, a field indicating the sink device to enable the auto low latency mode, and send the VBP and the video data to the sink device, so that the sink device enables the auto low latency mode according to the indication of the auto low latency field, to reduce a display delay of a video on the sink device.

Further, according to this method, when the sink device supports the auto low latency capability and the auto low latency mode needs to be enabled, a field indicating enablement of the auto low latency mode is carried in the VBP, so that there is no need for manual enablement, and therefore enablement of the auto low latency mode can be controlled more conveniently and dynamically.

In a possible implementation, the video transmission method provided in embodiments of this application further includes: transmitting a second vertical blanking packet VBP and second video data to the sink device, where an auto low latency field included in the second VBP is a second value, and the second value indicates disablement of the auto low latency mode for the second video data.

In a possible implementation, transmitting the first VBP and the first video data to the sink device specifically includes: transmitting a first video frame to the sink device, where the first video frame includes at least one first VBP and a plurality of first active video packets AVPs, and the plurality of first AVPs are for carrying the first video data.

In a possible implementation, transmitting the second VBP and the second video data to the sink device specifically includes: transmitting a second video frame to the sink device, where the second video frame includes at least one second VBP and a plurality of second active video packets AVPs, and the plurality of second AVPs are for carrying the second video data.

In embodiments of this application, a VBP is sent in each video frame, and the VBP includes a field for an auto low latency mode. In this way, frame-level control on video data can be implemented, to dynamically enable or disable the auto low latency mode for a video frame, resulting in high flexibility.

According to a second aspect, this application provides a video transmission method, applied to a sink device or a chip in the sink device, where the method includes: receiving a first vertical blanking packet VBP and first video data that are sent by a source device; and enabling an auto low latency mode for the first video data when an auto low latency field included in the first VBP is a first value.

In this application, after receiving the first VBP and the first video data that are sent by the source device, the sink device enables the auto low latency mode according to the indication of the auto low latency field in the first VBP sent by the source device, and quickly processes the first video data in the auto low latency mode, so that a display delay of a video on the sink device can be reduced.

Further, according to this method, when the sink device supports the auto low latency capability and the auto low latency mode needs to be enabled, a field indicating enablement of the auto low latency mode is carried in the VBP, so that there is no need for manual enablement, and therefore enablement of the auto low latency mode can be controlled more conveniently and dynamically.

In a possible implementation, the video transmission method provided in embodiments of this application further includes: receiving a second vertical blanking packet VBP and second video data that are sent by the source device; and disabling the auto low latency mode for the second video data when an auto low latency field included in the second VBP is a second value.

In a possible implementation, receiving the first vertical blanking packet VBP and the first video data that are sent by the source device specifically includes: receiving a first video frame sent by the source device, where the first video frame includes at least one first VBP and a plurality of first active video packets AVPs, and the plurality of first AVPs are for carrying the first video data.

In a possible implementation, receiving the second vertical blanking packet VBP and the second video data that are sent by the source device specifically includes: receiving a second video frame sent by the source device, where the second video frame includes at least one second VBP and a plurality of second active video packets AVPs, and the plurality of second AVPs are for carrying the second video data.

In a possible implementation, the sink device enables the auto low latency mode for the first video data. Then, to implement an auto low latency function to reduce a display delay of a video on the sink device, the sink device may choose not to perform processing for video picture quality enhancement on the video data. For example, the sink device does not perform, on the first video data, at least one of the following processing, including but not limited to: resolution conversion, noise suppression, contrast enhancement, color correction, motion compensation, or frame interpolation.

In this application, after enabling the auto low latency mode, the sink device does not need to perform some or all post-processing for picture quality enhancement. After completing necessary processing, the sink device can quickly display a video. In other words, the sink device can quickly process video data in the auto low latency mode. In this way, a display delay of a video can be reduced.

In a possible implementation, when the sink device disables the auto low latency mode, the sink device resumes performing at least one processing for video picture quality enhancement that is suspended when the auto low latency mode is enabled, that is, reactivates one or more processing modules for video picture quality enhancement. A process of performing processing for video picture quality enhancement can improve video picture quality.

According to a third aspect, this application provides a video processing apparatus. The video processing apparatus includes a module configured to perform the method according to any one of the implementations in the first aspect or the second aspect.

According to a fourth aspect, this application provides a source device, including a memory, a transceiver, and a processor, where the memory, the transceiver, and the processor are configured to cooperatively perform the method according to any one of the first aspect and the possible implementations thereof.

According to a fifth aspect, this application provides a sink device, including a transceiver and a processor, where the transceiver and the processor are configured to cooperatively perform the method according to any one of the second aspect and the possible implementations thereof.

According to a sixth aspect, this application provides a video transmission system. The video transmission system includes the source device provided in the fourth aspect and the sink device provided in the fifth aspect. The source device may be configured to implement a function of the source device in the first aspect or the second aspect, and the sink device may be configured to implement a function of the sink device in the first aspect or the second aspect. Therefore, the video transmission system can also achieve beneficial effects of the methods in the first aspect and the second aspect. Details are not described herein again.

According to a seventh aspect, this application provides a computer-readable storage medium, storing computer instructions. When the computer instructions are run on a compute device, the method according to any one of the first aspect and the possible implementations thereof or the method according to any one of the second aspect and the possible implementations thereof is performed. For example, the compute device is the foregoing source device or the foregoing sink device.

According to an eighth aspect, this application provides a computer program product. The computer program product includes computer instructions. When the computer instructions are run on a compute device, the method according to any one of the first aspect and the possible implementations thereof is performed. For example, the compute device is the foregoing source device or the foregoing sink device.

According to a ninth aspect, this application provides a chip system, including a processor configured to call a computer program from a memory and run the computer program, for a compute device in which the chip system is mounted to perform the method according to any one of the first aspect and the possible implementations thereof or the method according to any one of the second aspect and the possible implementations thereof. For example, the compute device is the foregoing source device or the foregoing sink device.

It should be understood that, for beneficial effects achieved based on the technical solutions in the second aspect to the ninth aspect and the corresponding possible implementations in this application, refer to the foregoing technical effects of the first aspect and the corresponding possible implementations thereof. Details are not described herein again.

### BRIEF DESCRIPTION OF DRAWINGS

FIG. 1 is a diagram of a video transmission system according to an embodiment of this application;
FIG. 2 is a diagram of an audio/video encoding and decoding system according to an embodiment of this application;
FIG. 3 is a block diagram of an audio/video sending adapter according to an embodiment of this application;
FIG. 4 is a block diagram of an audio/video receiving adapter according to an embodiment of this application;
FIG. 5 is a schematic flowchart 1 of a video transmission method according to an embodiment of this application;
FIG. 6 is a diagram of a structure of a vertical blanking packet VBP according to an embodiment of this application;
FIG. 7 is a diagram of a structure of a video frame according to an embodiment of this application;
FIG. 8 is a diagram of a structure of an active video packet AVP according to an embodiment of this application;
FIG. 9 is a schematic flowchart 2 of a video transmission method according to an embodiment of this application;
FIG. 10 is a diagram of a structure of a video processing apparatus according to this application;
FIG. 11 is a diagram of a structure of a video processing device according to this application; and
FIG. 12 is a diagram of a structure of a display device according to this application.

### DESCRIPTION OF EMBODIMENTS

The term "and/or" in this specification describes only an association relationship between associated objects and indicates that three relationships may exist. For example, A and/or B may indicate the following three cases: Only A exists, both A and B exist, and only B exists.

In the specification and claims in embodiments of this application, the terms "first", "second", and the like are intended to distinguish between different objects, but do not indicate a particular order of the objects. For example, first video data, second video data, and the like are intended to distinguish between different video data, but do not indicate a particular order of the video data.

In embodiments of this application, the word such as "example" or "for example" is intended to indicate giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a related concept in a specific manner.

In the descriptions of embodiments of this application, unless otherwise specified, "a plurality of" means two or more.

It may be understood that different scenarios have different requirements on a display delay of a sink device. For example, in a game scenario, the display delay of the sink device is required to be as low as possible, so that game experience of users can be high. For example, in other scenarios, there is no strict requirement on the display delay of the sink device. To meet requirements in different scenarios, embodiments of this application provide a video transmission method for video transmission between a source device and a sink device. The method supports an auto low latency mode (auto low latency mode, ALLM). When the source device detects that the sink device has an auto low latency capability, the source device may include, in a vertical blanking packet (vertical blanking packet, VBP), a field indicating the sink device to enable the auto low latency mode, and send the vertical blanking packet and video data to the sink device, so that the sink device enables the auto low latency mode according to the indication of the auto low latency field, to reduce a display delay of the video data on the sink device.

The technical solutions in embodiments of this application may be applied to current audio/video transmission technologies or audio/video criteria, and may be further applied to future audio/video transmission technologies or audio/video criteria. Terms used in implementations of this application are only used to explain specific embodiments of this application, but are not intended to limit this application. The following first briefly describes some concepts that may be used in this application.

Video streaming (video streaming) means video data transmission. For example, a video stream can be processed as a stable and continuous flow over a network. A video (also referred to as video data) captured by a video capture device includes a plurality of frames of images. The video data forms a video stream after encapsulation and packaging. The video stream includes a plurality of video frames, and each video frame corresponds to one frame of image.

In embodiments, "video" is a general term. A video is an image sequence including a plurality of consecutive frames, and one frame corresponds to one image. "Audio/video" is an information application technology term, and means a video, audio, or multimedia content including a video and audio.

A video format supported by the video transmission method provided in embodiments of this application includes but is not limited to RGB, YCbCr 4:4:4, YCbCr 4:2:2, YCbCr 4:2:0, ARGB, Y-only, and RAW.

A component bit width (or a color depth) of video data supported by the video transmission method provided in embodiments of this application includes but is not limited to one or more of the following: 8 bits, 10 bits, 12 bits, or 16 bits. For example, video data in an RGB format has a component bit width of 8 bits. Then, for a pixel, an R component occupies 8 bits, a G component occupies 8 bits, and a B component occupies 8 bits. This may alternatively be described as follows: The video transmission method supports video data of 8 bpc (bit per component), 10 bpc, 12 bpc or 16 bpc.

To make descriptions of the following embodiments clear and concise, related technologies are first described.

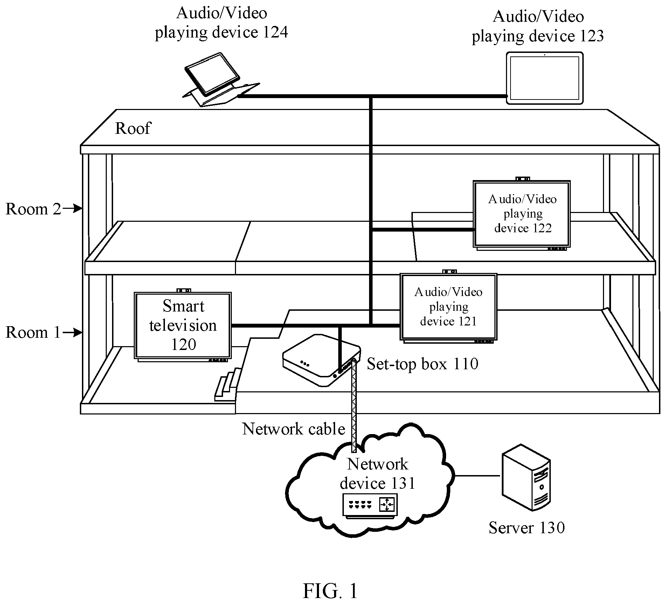

FIG. 1 is a diagram of a video transmission system according to an embodiment of this application. A video processing process may include but is not limited to: video acquisition, video encoding, video transmission, and video decoding and playing.

The audio/video transmission system in FIG. 1 includes a set-top box 110, a smart television 120, a plurality of audio/video playing devices, and a server 130. The set-top box 110 connects to an operator network through a network cable, and may receive audio/video streams from the server 130. The network can implement an audio/video transmission function. The network may include one or more network devices. For example, a network device 131 may be a router or a switch. In some optional implementations, the set-top box 110 and the server 130 may alternatively communicate with each other through wireless communication. This is not limited in embodiments of this application.

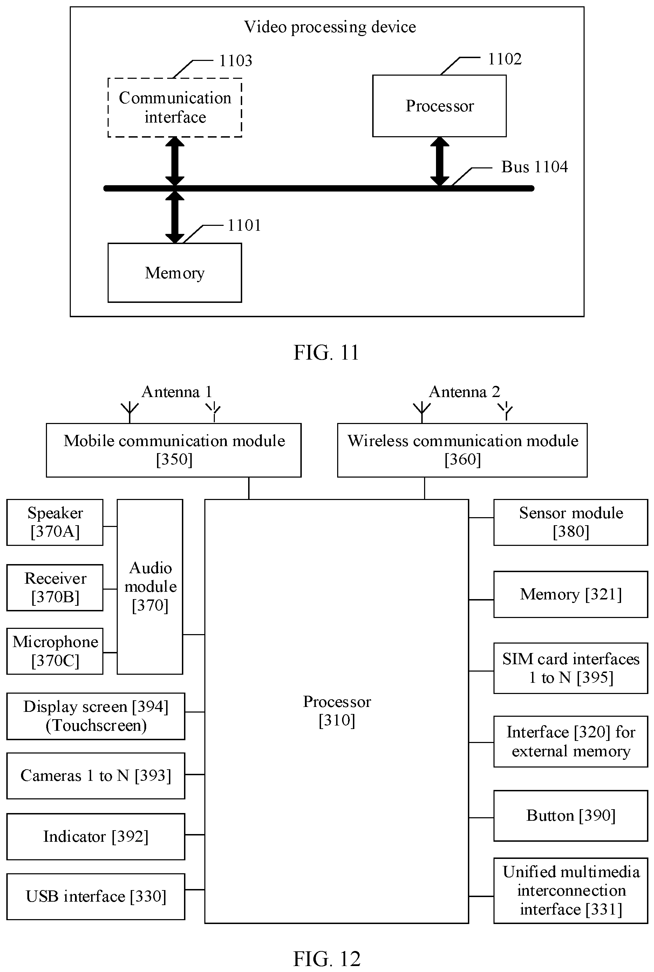

The set-top box 110 is an audio/video processing device configured to implement functions such as receiving, processing, and pushing video streams or audio/video streams. In some possible cases, the set-top box 110 may also be referred to as an Internet television set-top box, a network high-definition player, or the like. For example, the set-top box 110 may be a television box provided by a network operator, or may be a television box purchased by a user. For hardware implementation of the set-top box 110, refer to the following description of FIG. 11. Details are not described herein again.

The smart television 120 is a display device with an audio/video processing function, for implementing functions such as receiving, processing, pushing, and playing video streams or audio/video streams. In some possible cases, the smart television 120 may be an audio/video device such as a conference tablet, an intelligent television, or a projector. This is not limited in embodiments of this application. For hardware implementation of the smart television 120, refer to the following description of FIG. 11 or FIG. 12. Details are not described herein again.

The plurality of audio/video playing devices include an audio/video playing device 121 to an audio/video playing device 124. For example, these audio/video playing devices may include but are not limited to a multimedia control platform or another device that supports an audio/video playing function, such as a virtual reality (virtual reality, VR) terminal device or an augmented reality (augmented reality, AR) terminal device. For hardware implementation of the audio/video playing device, refer to the following description of FIG. 12. Details are not described herein again.

In this embodiment, the set-top box 110 and the smart television 120 are connected through a network, for example, may be connected through an audio/video interface network, the set-top box 110 and each audio/video playing device may also be connected through an audio/video interface network, and the smart television 120 and each audio/video playing device may also be connected through an audio/video interface network. For example, the audio/video interface network may be a wired network that supports video and audio/video transmission. Optionally, the audio/video interface network may be referred to as a unified multimedia interconnection network. In some implementations, the unified multimedia interconnection network may also have another name.

The unified multimedia interconnection network can support uncompressed video and compressed video transmission, and can support various advanced features such as quick video transport (quick video transport, QVT), auto low latency (auto low latency mode, ALLM), and dynamic frame rate refresh (dynamic frame rate refresh, DFR). The unified multimedia interconnection network can also support audio and videos in an LPCM format as defined in IEC 60958 and a plurality of HDR protocols, for example, an HDR protocol specified in T/UWA 005.1-2022, such as HDR Vivid (HDR Vivid). The unified multimedia interconnection network further supports encryption, control, and protection for audio/video data transmission.

The server 130 may be an application server or an authentication and authorization server. The server 130 may provide a video service, a game service, a message service, a music service, an authentication and authorization service, and the like. In an example, functions of a plurality of services may be integrated into the server 130. For example, the game service and the music service may be deployed on the server 130. In another example, functions of some services may be integrated into the server 130. For example, a part of the game service and a part of the video service are deployed on the server 130. The server 130 may further provide a plurality of virtual machines by using a virtualization technology, and the virtual machines provide various services. A deployment form for the server is not limited in embodiments of this application. The network device 131 is connected to the server 130 in a wireless or wired manner. The diagram FIG. 1 is merely an example. The network may further include another device that is not shown in FIG. 1.

FIG. 1 is merely a diagram. The audio/video transmission system may further include another device that is not shown in FIG. 1. A quantity and types of devices included in the system are not limited in embodiments of this application.

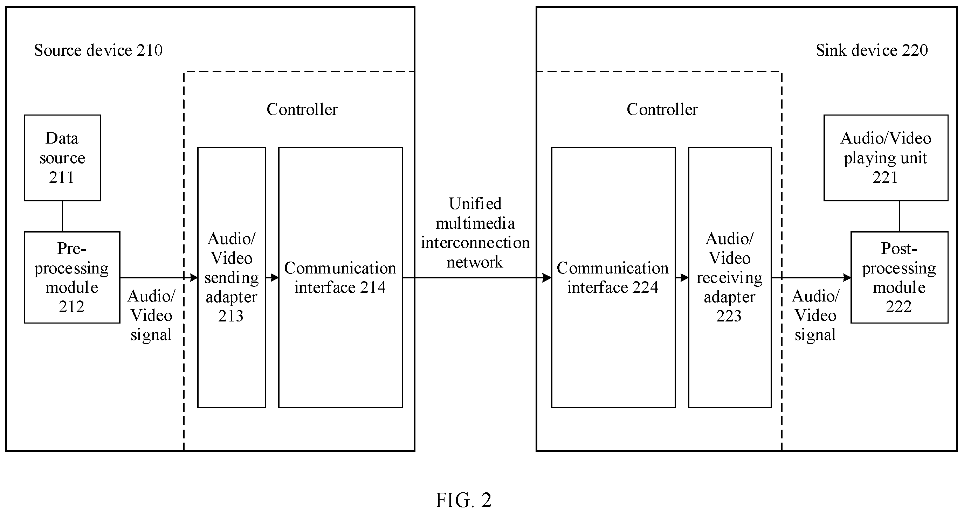

Based on the audio/video transmission system shown in FIG. 1, FIG. 2 is a diagram of an audio/video encoding and decoding system according to an embodiment of this application. The audio/video encoding and decoding system includes a source device 210 and a sink device 220. The source device 210 establishes a communication connection with the sink device 220 through a unified multimedia interconnection network.

The source device 210 can implement an audio/video encoding function. As shown in FIG. 1, the source device 210 may be the set-top box 110 or the smart television 120 shown in FIG. 1, or the source device 210 may be an audio/video control center with an audio/video encoding capability. For example, the audio/video control center includes one or more servers.

The source device 210 may include a data source 211, a pre-processing module 212, an audio/video sending adapter 213, and a communication interface 214.

The data source 211 may include or may be any type of electronic device configured to acquire audio and videos, and/or any type of source audio/video generation device, for example, a computer graphics processing unit configured to generate a computer animation scene or any type of device configured to obtain and/or provide source audio and videos, and computer-generated source audio and videos. The data source 211 may be any type of memory or storage that stores the source audio and videos. The source audio and videos may include a plurality of audio/video streams or images acquired by a plurality of audio/video acquisition apparatuses (for example, cameras), such as an ultra high definition (Ultra High Definition, UHD) video, a high definition (High Definition, HD) video, a 4K video, and an 8K video.

The pre-processing module 212 is configured to receive source audio and videos, and perform pre-processing on the source audio and videos, to obtain audio and videos or a plurality of frames of images. For example, the pre-processing performed by the pre-processing module 212 may include color format conversion (for example, conversion from RGB to YCbCr), octree structuring, audio/video stitching, audio track merging and deletion, or channel count adjustment.

The audio/video sending adapter 213 is configured to receive audio and videos or images, and encode the audio and videos or the images to obtain encoded data. In some optional cases, a code stream obtained through encoding (encoded data) may also be referred to as a bit stream. If the encoded data is obtained by encoding audio/video data, the bit stream is an audio/video stream. If the encoded data is obtained by encoding video data, the bit stream is a video stream.

The communication interface 214 in the source device 210 may be configured to: receive the encoded data (such as the video stream or the audio/video stream), and send the encoded data (or any other processed version of the encoded data) to the sink device 220 or any other device through a unified multimedia interconnection network, for storage, display, playing, image reconstruction, or the like.

Optionally, the source device 210 includes a bit stream buffer, and the bit stream buffer is configured to store a bit stream corresponding to one or more encoding units.

The sink device 220 can implement an audio/video decoding function. As shown in FIG. 1, when the source device 210 is the set-top box 110, the sink device 220 may be the smart television 120 or any one of the audio/video playing devices shown in FIG. 1; or when the source device 210 is the smart television 120, the sink device 220 may be any one of the audio/video playing devices.

The sink device 220 may include an audio/video playing unit 221, a post-processing module 222, an audio/video receiving adapter 223, and a communication interface 224.

The communication interface 224 in the sink device 220 is configured to receive encoded data (or any other processed version of the encoded data) from the source device 210 or from any other source device such as a storage device.

The communication interface 214 and the communication interface 224 may be used for a direct communication link between the source device 210 and the sink device 220, for example, a direct wired connection, such as the unified multimedia interconnection network in FIG. 2. For content of the unified multimedia interconnection network, refer to the description in FIG. 1. Details are not described herein again.

The communication interface 224 and the communication interface 214 correspond to each other, for example, may be configured to transmit data and process the data through any type of corresponding transmission decoding or processing and/or decapsulation, to obtain audio/video data.

Both the communication interface 224 and the communication interface 214 may be configured as a unidirectional communication interface indicated by an arrow that corresponds to the unified multimedia interconnection network and that points from the source device 210 to the sink device 220 in FIG. 2, or a bidirectional communication interface, and may be configured to send and receive messages to establish a connection and transmit other information, for example, transmit information about a communication link or transmit information about audio/video data (for example, audio/video descriptive information DIP).

The audio/video receiving adapter 223 is configured to receive encoded data and decode the encoded data to obtain decoded data (videos or audio and videos).

The post-processing module 222 is configured to perform post-processing on the decoded data, to obtain post-processed data (for example, to-be-displayed images or to-be-played audio and videos). The post-processing performed by the post-processing module 222 may include, for example, color format conversion (for example, conversion from YCbCr to RGB), octree reconstruction, audio/video separation and merging, or any other processing for generating data to be output by the audio/video playing unit 221.

The audio/video playing unit 221 is configured to receive the post-processed data for display or playing to users, viewers, or the like. The audio/video playing unit 221 may be or include any type of display configured to represent a reconstructed image, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any other type of display screen. The audio/video playing unit 221 may further include one or more audio/video playing modules, and each audio/video playing module may be a speaker, a smart speaker, a power amplifier, or the like.

In an optional implementation, the source device 210 and the sink device 220 may transmit encoded data by using a data forwarding device. For example, the data forwarding device may be a router or a switch. It should be noted that the data forwarding device needs to support a unified multimedia interconnection network.

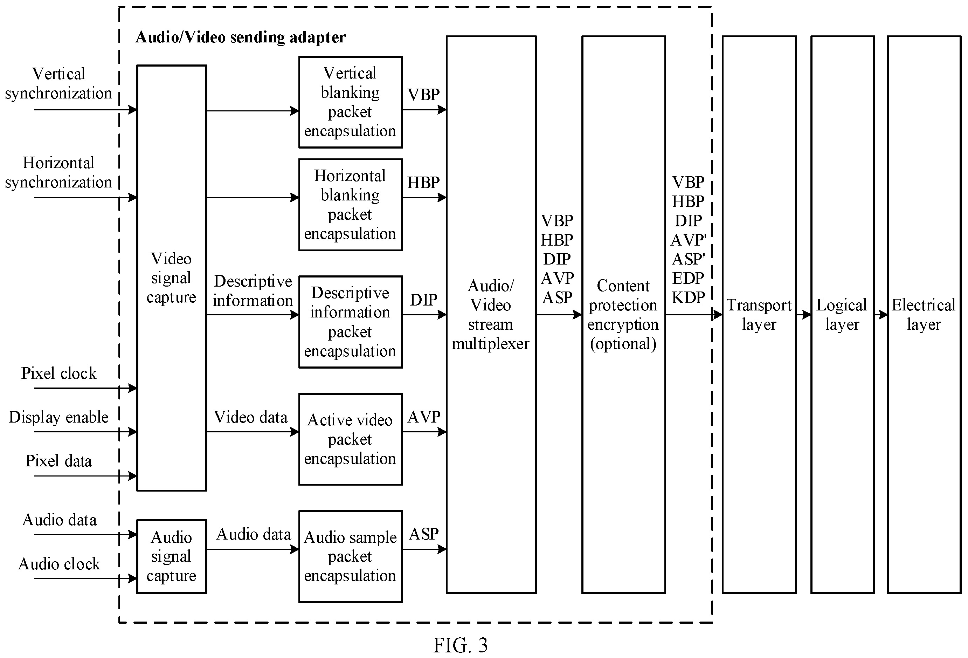

FIG. 3 is a logical block diagram of an audio/video sending adapter. The audio/video sending adapter is responsible for receiving audio signals, descriptive information, and video signals such as vertical synchronization (Vsync)/horizontal synchronization (Hsync)/pixel clock/video data/display enable (DE), and encapsulating the audio signals, descriptive information, and video signals into corresponding packets, such as a vertical blanking packet (vertical blanking packet, VBP), a horizontal blanking packet (horizontal blanking packet, HBP), an active video packet (active video packet, AVP), an audio sample packet (audio sample packet, ASP), and a descriptive information packet (descriptive information packet, DIP). When a content protection function is enabled, the AVP and the ASP need to be sent to a content protection encryption module for encryption, and an encryption description packet (encryption description packet, EDP) and a key distribution packet (key distribution packet, KDP) are generated. The encrypted AVP is AVP', and the encrypted ASP is ASP'. These packets are multiplexed into one audio/video stream by using an audio/video stream multiplexer, and then the audio/video stream is sent to an audio/video receiving adapter of a sink device through a transport layer and an electrical layer of a unified multimedia interconnection network.

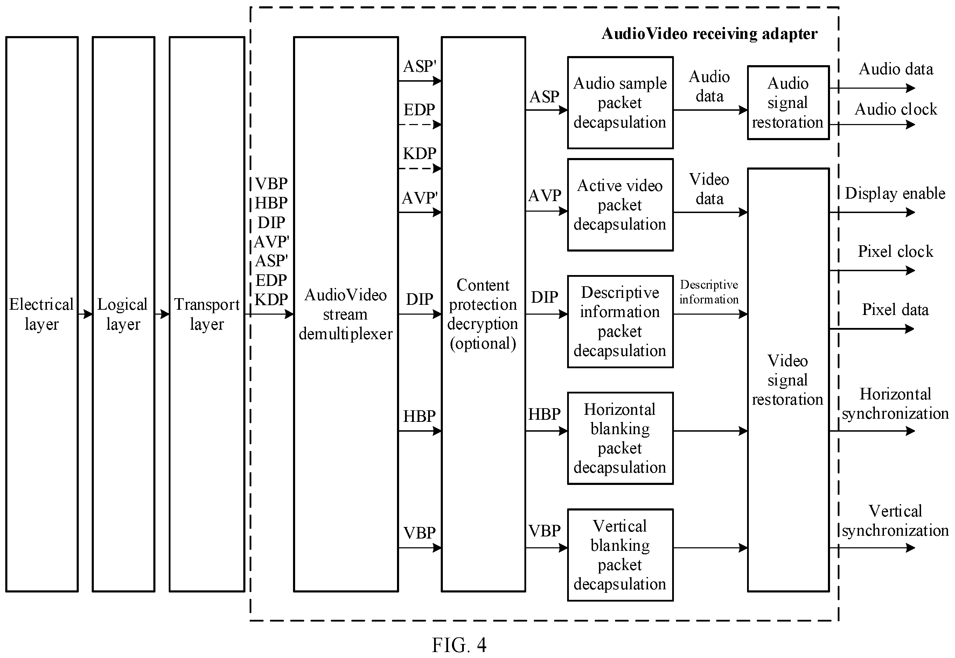

FIG. 4 is a logical block diagram of an audio/video receiving adapter. The audio/video receiving adapter is responsible for receiving an audio/video stream, parsing the audio/video stream to obtain various packets (VBP, HBP, DIP, AVP (AVP' if encrypted), and ASP (ASP' if encrypted)), and restoring vertical synchronization (Vsync)/horizontal synchronization (Hsync)/pixel clock/pixel data/display enable (DE)/audio clock/audio data based on the packets.

The following describes in detail implementations of a video transmission method according to embodiments of this application with reference to the accompanying drawings.

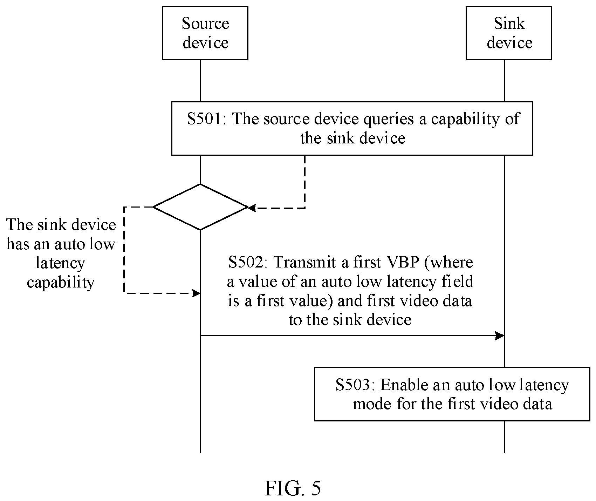

Herein, an example in which the video transmission method according to embodiments of this application is performed by the source device 210 or a chip in the source device 210, or the sink device 220 or a chip in the sink device 220 shown in FIG. 2 is used for description. FIG. 5 is a schematic flowchart of a video transmission method according to this application. In this embodiment, the source device may also be referred to as an audio/video sending device, an audio/video sending end, or the like, and the sink device may also be referred to as an audio/video receiving device, an audio/video playing device, or the like. In this embodiment, the source device and the sink device are connected through a unified multimedia interconnection network.

In a first possible application scenario, the source device may be the set-top box 110 in FIG. 1, and the sink device may be the smart television 120 in FIG. 1. For example, the set-top box pushes audio/video data to the smart television.

In a second possible application scenario, the source device may be the set-top box 110 in FIG. 1, and the sink device may be any one of the audio/video playing devices in FIG. 1, for example, any one of the audio/video playing device 121 to the audio/video playing device 124. For example, the set-top box pushes audio/video data to the audio/video playing device.

In a third possible application scenario, the source device may be the smart television 120 in FIG. 1, and the sink device may be any one of the audio/video playing devices in FIG. 1, for example, any one of the audio/video playing device 121 to the audio/video playing device 124. For example, the smart television pushes audio/video data to the audio/video playing device.

The foregoing three possible application scenarios are merely examples provided in this embodiment, and should not be construed as a limitation on this application. In some other possible examples, the source device may be any one of the audio/video playing devices (for example, the audio/video playing device 121) in FIG. 1, and the sink device is another audio/video playing device (for example, the audio/video playing device 122) different from the foregoing audio/video playing device.

As shown in FIG. 5, the video transmission method provided in an embodiment of this application includes S501 to S503.

S501: The source device queries a capability of the sink device.

In an embodiment of this application, the sink device provides information indicating a capability of the sink device. That the source device queries the capability of the sink device includes that the source device obtains capability description information of the sink device. A process in which the source device obtains the capability information of the sink device includes: The source device sends a query message to the sink device, where the query message is for querying the capability of the sink device. Then, the sink device sends (feeds back) the capability description information of the sink device to the source device, and the source device receives the capability description information sent by the sink device, where the capability description information may indicate the capability of the sink device.

The capability description information of the sink device may include information indicating an auto low latency capability of the sink device, that is, indicating whether the sink device has the auto low latency capability. In some possible cases, the capability description information may also be referred to as a capability descriptor, and the capability descriptor may include one or more bits of information.

In some cases, the capability description information of the sink device may also be referred to as device comprehensive capability description (device comprehensive capability description) information, and a interval in which the DCCD information is stored in the sink device is referred to as a DCCD interval or DCCD for short. This is not limited in this application. In the DCCD, the sink device declares whether to support the auto latency capability, for example, supporting the auto low latency capability. The source device queries the capability of the sink device based on the DCCD, and then the sink device feeds back its capability to the source device.

Optionally, the DCCD may further store other content that describes an audio/video processing capability of the sink device, such as an audio processing capability (whether the sink device supports processing a pure audio data packet) or an HDR display capability (whether the sink device supports displaying a specific type of HDR video, for example, HDR Vivid).

In an optional example, the sink device includes a memory, and the memory stores the capability description information. The memory may include but is not limited to: a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

In another optional example, the sink device includes a dedicated register, and a status of the dedicated register indicates the foregoing capability description information. If a value indicated by the register is 1, the capability description information indicates that the sink device has the auto low latency capability. If a value indicated by the register is 0, the capability description information indicates that the sink device does not have the auto low latency capability.

S502: The source device transmits a first VBP and first video data to the sink device when the sink device has an auto low latency capability, where an auto low latency (ALLM) field included in the first VBP is a first value, and the first value indicates enablement of an auto low latency mode for the first video data. Correspondingly, the sink device receives the first VBP and the first video data that are sent by the source device.

The first video data is one frame of data in video data to be sent by the source device, that is, the first video data corresponds to active data (or an active pixel, or active pixel data) of one frame image in a video.

It may be understood that, when the source device determines that the sink device has the auto low latency capability, the source device may choose, based on an actual requirement, whether to indicate the sink device to enable the auto low latency mode, for example, choose, based on a type of video content, whether to enable the auto low latency mode. Optionally, different types of video content may include but are not limited to a graph, an image, a video, or a game. The source device may alternatively choose, for all types of video content, whether to enable the auto low latency mode.

In an embodiment of this application, a vertical blanking packet is for transmitting a VBS (Vblank Start) signal, namely, a vertical blanking start signal. The vertical blanking packet VBP includes a 4-byte packet header (also referred to as a tunnel packet header) and a 28-byte message payload (also referred to as a payload or a load), totaling 32 bytes.

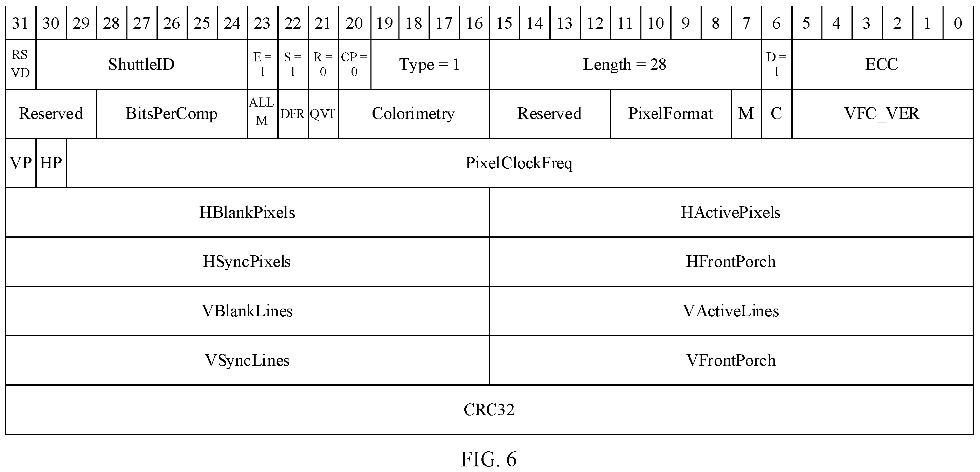

For example, as shown in a diagram of a structure of a VBP in FIG. 6, a tunnel packet header occupies 4 bytes, a message payload occupies 28 bytes, and a single VBP occupies a total of 32 bytes. The following describes the tunnel packet header and the message payload of the VBP by using examples respectively with reference to Table 1 and Table 2.

**Table 1: Tunnel packet header of the VBP**

| Field | Length (bits) | Description |
|---|---|---|
| ECC | 6 | Error correction code (Error Correction Code, ECC) |
| D | 1 | Fixed to 1, indicating a tunnel packet |
| Length | 9 | Packet length: 28 bytes (bytes) |
| Type | 4 | Fixed to 4b'0001, indicating that the packet is a VBP |
| Flags | 4 | CP: content protection flag, fixed to "0 unprotected" |
| | | R: reserved, fixed to 0 |
| | | S: packet start flag, fixed to 1 |
| | | E: packet end flag, fixed to 1 |
| ShuttleID | 7 | Identifies a data transmission channel on a link (Link), with a value ranging from 0 to 127 |
| RSVD | 1 | Reserved |

The message payload of the VBP includes frame-level control information (video frame control, VFC) that describes information about this frame of video.

**Table 2: Message payload of the VBP**

| Field | Length (bits) | Description |
|---|---|---|
| VFC_VER | 6 | Format version of video frame-level control information |
| | | Default: 0x01, other values: reserved |
| C | 1 | PLC enable: |
| | | 0: Disable PLC compression |
| | | 1: Enable PLC compression |
| M | 1 | Mute video flag (MuteVideoFlag) |
| | | This bit is set to 1 when a video requires output blanking |
| | | When receiving a video frame whose MuteVideoFlag is 1, a sink device needs to identify that the current frame requires blanking. |
| | | A recommended method for mute frame handling on the sink device is displaying a black screen or displaying a previous frame. |
| | | Data arrangement format: |
| | | 00h: RGB |
| | | 01h: YCbCr 4:4:4 |
| | | 02h: YCbCr 4:2:2 |
| PixelFormat | 4 | 03h: YCbCr 4:2:0 |
| | | 04h: Y-Only |
| | | 05h: ARGB |
| | | 06h: Raw Data |
| | | 07h-0Fh: Reserved |
| Reserved | 4 | Reserved |
| | | Pixel color gamut |
| | | RGB/ARGB: |
| | | 00h: sRGB |
| | | 01h: Adobe_{RGB} |
| | | 02h: ITU-R BT.2020 R'G'B' |
| | | 03h: DCI-P3 R'G'B' (D65) |
| | | 04h: DCI-P3 R'G'B' (theater) |
| | | 05h-1Fh: Reserved |
| ColoriMetry | 5 | |
| | | YCbCr 4:4:4/YCbCr 4:2:2/YCbCr 4:2:0: |
| | | 00h: ITU-R BT.601 |
| | | 01h: ITU-R BT.709 |
| | | 02h: Adobe_{YCC601} |
| | | 03h: ITU-R BT.2020 Y'_{C}C'_{BC}C'_{RC} |
| | | 04h: ITU-R BT.2020 Y'C_{B}'C_{R}' |
| | | 05h-1Fh: Reserved |
| | | Y-Only: |
| | | 00h: DICOM PART#14 grayscale standard display |
| | | 01h-1Fh: Reserved |
| | | RAW: |
| | | 00h: Customized configuration |
| | | 01h-1Fh: Reserved |
| | | Whether to enable QVT (quick video transport) |
| QVT | 1 | 0: No |
| | | 1: Yes |
| | | Whether to enable DFR (dynamic frame rate refresh) |
| DFR | 1 | 0: No |
| | | 1: Yes |
| | | Whether to enable ALLM (auto low latency mode) |
| ALLM | 1 | 0: No |
| | | 1: Yes |
| BitsPerComp | 5 | Component bit width: |
| | | 0x08: 8bit |
| | | 0x0A: 10bit |
| | | 0x0C: 12bit |
| | | 0x10: 16bit |
| | | Other values: Reserved |
| Reserved | 3 | Reserved |
| PixelClockFreq | 30 | Pixel clock frequency of a video stream |
| | | Unit: 1 kHz, frequency offset: less than 500 ppm |
| | | Horizontal synchronization polarity (Hsync Polarity) |
| HP | 1 | 0b: Hsync is at a high level |
| | | 1b: Hsync is at a low level |
| | | Vertical synchronization polarity |
| VP | 1 | 0b: Vsync is at a high level |
| | | 1b: Vsync is at a low level |
| HActivePixels | 16 | Quantity of horizontal active pixels. Unit: pixel |
| HBlankPixels | 16 | Quantity of pixels in a horizontal blanking interval. Unit: pixel |
| HFrontPorch | 16 | Quantity of pixels at a horizontal blanking interval front porch. Unit: pixel |
| HsyncPixels | 16 | Quantity of Hsync pixels. Unit: pixel |
| VActiveLines | 16 | Quantity of active lines in one frame. Unit: line |
| VBlankLines | 16 | Quantity of lines in a vertical blanking interval. Unit: line |
| VFrontPorch | 16 | Quantity of lines at a vertical blanking interval front porch. |
| | | Unit: line |
| VsyncLines | 16 | Quantity of Vsync lines. Unit: line |
| CRC32 | 32 | CRC check |

As shown in Table 2, the ALLM in Table 2 is an auto low latency field, and the ALLM field occupies 1 bit. When a value of the ALLM field is 1, the auto low latency mode is enabled. When a value of the ALLM field is 0, the auto low latency mode is disabled. When the source device determines that the auto low latency mode needs to be enabled, the source device sets 1bit of the ALLM field in the VBP to 1, to indicate the sink device to enable the ALLM mode.

In a possible implementation, a process in which the source device transmits the first VBP and the first video data to the sink device specifically includes: The source device transmits a first video frame to the sink device, where the first video frame includes at least one first VBP and a plurality of first active video packets AVPs, and the plurality of first AVPs are for carrying the first video data.

In an embodiment of this application, after obtaining video data, the source device (the audio/video sending adapter in the source device) encapsulates the video data into an AVP packet. It may be understood that one frame of video data is encapsulated into a plurality of AVP packets. Optionally, the source device may send three VBPs to the sink device, to ensure a success rate of sending the VBP.

It may be understood that, with reference to the block diagram of the audio/video sending adapter shown in FIG. 3, after the audio/video sending adapter in the source device encapsulates video data into an AVP packet, the AVP packet and other packets in the source device are multiplexed into one video stream by using an audio/video stream multiplexer. The other packets include a vertical blanking packet (vertical blanking packet, VBP), a horizontal blanking packet (horizontal blanking packet, HBP), an active video packet (AVP), an audio sample packet (audio sample packet, ASP), and a descriptive information packet (descriptive information packet, DIP). The video stream includes a plurality of video frames, and each video frame corresponds to one image of the video.

Based on the above, in an embodiment of this application, a video frame includes an AVP that carries video data, and also includes a VBP that carries frame-level control information.

In embodiments of this application, a VBP is sent in each video frame, and the VBP includes a field for an auto low latency mode. In this way, frame-level control on video data can be implemented, to enable the auto low latency mode for a video frame, resulting in high flexibility.

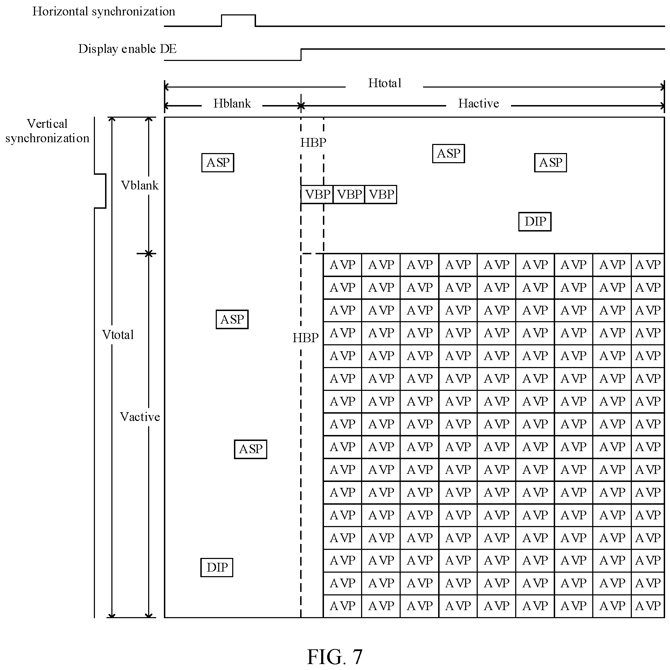

With reference to FIG. 7, the following describes an example of a format of a video frame in a video stream. FIG. 7 is a diagram of a structure of a video frame according to this application. In FIG. 7, a video frame includes a multimedia packet and a time sequence signal.

The multimedia packet includes one or two of an active video packet (AVP) and an audio sample packet (ASP). The AVP packet is used to transmit video data, and the ASP packet is used to transmit audio data. For example, in FIG. 7, a plurality of AVP packets are arranged in lines in the video frame, and a plurality of AVP packets in a same line form a video line.

It should be noted that the structure of the video frame in FIG. 7 is merely an example provided in this application, and should not be construed as a limitation on this application. In some possible implementations, a single video frame may alternatively include only one line of AVP packets. This is not limited in this application.

Optionally, when a link bandwidth is greater than a video bandwidth, an ASP may be inserted between two AVPs, but a priority of the ASP is lower than that of the AVP.

The time sequence signal includes a horizontal synchronization signal (Hsync), a vertical synchronization signal (Vsync), and a display enable (display enable, DE) signal. These time sequence signals are used to describe a video time sequence of a video, that is, when to transmit which packet or signal. Hsync indicates the start of scanning a line of pixels (for example, a signal received by a line register in the sink device is 1). Vsync indicates the start of scanning a video frame. The display enable DE indicates whether active data can be received (for example, DE = 1 indicates that active data can be received, and DE = 0 indicates that active data cannot be received).

With reference to FIG. 7, a video time sequence of a video frame is briefly described: A video frame includes a vertical blanking interval, a horizontal blanking interval, and an active video interval. In the blanking interval, an AVP packet cannot be transmitted in the video frame, but other packets such as an ASP packet and a DIP packet can be transmitted. In the active video interval, an AVP packet that carries audio/video data can be transmitted in the video frame. A start point of Hactive is identified by a horizontal blanking packet (horizontal blanking packet, HBP), and the HBP indicates the end of the line blanking interval. For example, the audio/video sending adapter in the source device immediately sends the HBP at the end of Hblank in each video line.

In the video frame shown in FIG. 7, the line blanking interval of the video frame includes a VBP, and the VBP indicates a video line in which a Vsync rising edge (in terms of positive polarity) of a video frame is located. For example, the audio/video sending adapter in the source device sends one or more VBPs (for example, three consecutive VBPs in FIG. 7) in each frame, and an ASP and a DIP cannot be inserted between VBPs. For example, if Vsync features positive polarity, the audio/video sending adapter replaces an HBP with a VBP in a video line in which a Vsync rising edge is located, and then sends two VBPs next to the VBP. If Vsync features negative polarity, the audio/video sending adapter replaces an HBP with a VBP in a video line in which a Vsync falling edge is located, and then sends two VBPs next to the VBP.

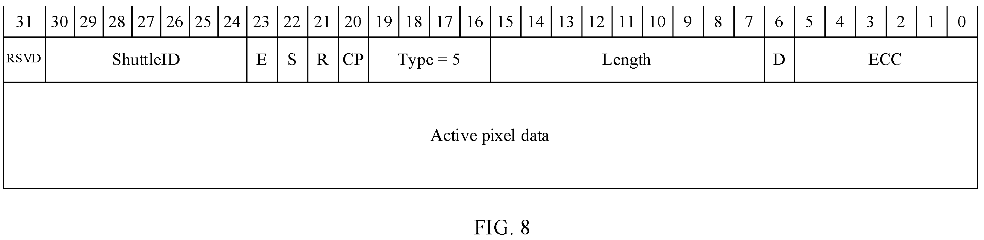

With reference to a diagram of a structure of an active video packet AVP shown in FIG. 8, the AVP includes two parts: a packet header and a payload (totaling 512 bytes (byte)). A length of the packet header is 32 bits. The payload is for transmitting active video pixel data (also referred to as video data, or active data of a video, or active pixels, or active pixel data, or pixel data of an active video), with a length not greater than 508 bytes.

The structure of the packet header of the active video packet AVP is described in Table 3 below.

**Table 3: AVP packet header**

| Field | Length (bits) | Description |
|---|---|---|
| ECC | 6 | Error correction code |
| D | 1 | Fixed to 1, indicating a tunnel packet |
| Length | 9 | Packet length (excluding a tunnel packet header), with a value ranging from 0 to 508 |
| Type | 4 | Fixed to 4b'0101, indicating that the packet is an active video packet AVP |
| | | Flag field, its meaning is defined by the Adapter, for example, in a video: |
| Flags | 4 | CP: content protection flag, 0 unprotected, 1 ADCP-protected |
| | | R: reserved, fixed to 0 |
| | | S: packet start flag, which is a first packet flag in a line of |
| | | pixels of the active video packet |
| | | E: packet end flag, which is a last packet flag in a line of pixels of the active video |
| ShuttleID | 7 | Identifying a data transmission channel on a link (Link), with a value ranging from 0 to 127 |
| RSVD | 1 | Reserved |

With reference to FIG. 8, it can be learned that each AVP is encapsulated with each line occupying 32 bits. In other words, in the payload of the AVP packet, each line includes 32-bit data. If 32 bits (that is, 4 bytes) are defined as a symbol, a payload of an AVP includes a plurality of symbols.

It may be understood that, after the audio/video receiving adapter of the sink device receives the video stream, the sink device parses the first video frame (including the first VBP and the first video data) in the video stream to obtain a value of an ALLM field in the VBP, and determines whether to enable the auto low latency mode. Specifically, when the auto low latency field included in the first VBP is the first value (that is, the value of the ALLM field is 1), the sink device performs the following S503.

S503: Enable the auto low latency mode for the first video data.

Corresponding to the VBP sent by the video sending adapter in the source device, after receiving the VBP, the video receiving adapter in the sink device first performs a CRC check. If the check fails, a next VBP is received until a correct VBP is received. In other words, the receive end uses the first correct VBP received.

In a possible implementation, the sink device enables the auto low latency mode for the first video data. Then, to implement an auto low latency function to reduce a display delay of a video on the sink device, the sink device may choose not to perform processing for video picture quality enhancement on the video data. The processing for video picture quality enhancement includes but is not limited to at least one of resolution conversion, noise suppression, contrast enhancement (also referred to as dynamic contrast range enhancement), color correction, motion compensation, frame interpolation, audio/video synchronization, and super-resolution processing. It should be understood that the processing for video picture quality enhancement requires a long time.

In a possible example, the sink device does not perform, on the first video data, at least one of the following processing, including but not limited to: resolution conversion, noise suppression, contrast enhancement, color correction, motion compensation, or frame interpolation. In other words, the sink device may choose to disable one or more processing modules configured to perform video picture quality enhancement. For example, the sink device disables a module for resolution conversion. In embodiments of this application, after enabling the auto low latency mode, the sink device does not need to perform some or all post-processing for picture quality enhancement. After completing necessary processing, the sink device can quickly display a video. In other words, the sink device can quickly process video data in the auto low latency mode. In this way, a display delay of a video can be reduced.

In some cases, devices from different device vendors provide different processing methods for video picture quality enhancement. Then, sink devices from different device vendors with the auto low latency mode enabled may perform different processing processes. For example, a method for a sink device 1 to perform picture quality enhancement includes resolution conversion, noise suppression, and contrast enhancement, and a method for a sink device 2 to perform picture quality enhancement includes contrast enhancement, color correction, motion compensation, or frame interpolation. When the sink device 1 enables the auto low latency mode, the sink device disables a processing module for resolution conversion and a processing module for contrast enhancement. When the sink device 2 enables the auto low latency mode, the sink device disables a processing module for contrast enhancement and a processing module for frame interpolation.

In some other cases, devices of different categories from a same device vendor may provide a same processing method for video picture quality enhancement. In a possible implementation, different sink devices from a same device vendor with the auto low latency mode enabled may also perform different processing processes. For example, both a sink device 1 and a sink device 2 include processing modules for implementing resolution conversion, noise suppression, contrast enhancement, color correction, motion compensation, and frame interpolation. However, when the sink device 1 enables the auto low latency mode, the sink device disables the processing module for resolution conversion and the processing module for noise suppression. When the sink device 2 enables the auto low latency mode, the sink device disables the processing module for contrast enhancement and the processing module for frame interpolation.

Optionally, when the sink device enters or exits the low latency mode, the sink device needs to avoid anomalies such as black screens and artifacts of videos, and noise and popping sounds of audio, and keep the audio and video synchronous.

In conclusion, in the video transmission method provided in embodiments of this application, when the source device detects that the sink device has an auto low latency capability, the source device may include, in a vertical blanking packet (vertical blanking packet, VBP), a field indicating the sink device to enable an auto low latency mode, and send the vertical blanking packet and video data to the sink device, so that the sink device enables the auto low latency mode according to the indication of the auto low latency field, to reduce a display delay of the video on the sink device.

Further, according to this method, when the sink device supports the auto low latency capability and the auto low latency mode needs to be enabled, a field indicating enablement of the auto low latency mode is carried in the VBP, so that there is no need for manual enablement, and therefore enablement of the auto low latency mode can be controlled more conveniently and dynamically.

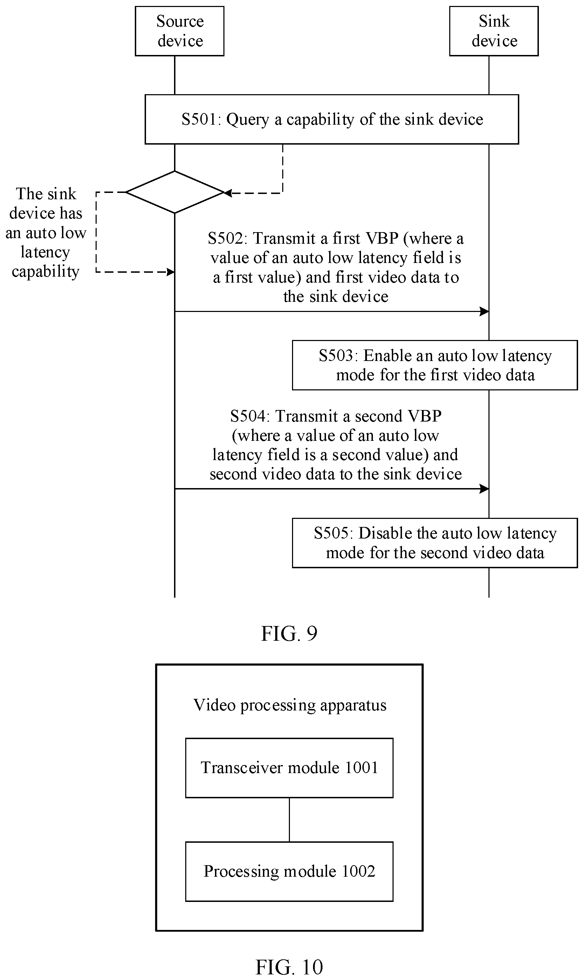

In a possible implementation, in the video transmission method provided in embodiments of this application, the auto low latency mode may be further disabled in a video data transmission process. With reference to FIG. 5, as shown in FIG. 9, after S503, the video transmission method provided in embodiments of this application further includes S504 and S505.

S504: The source device transmits a second vertical blanking packet VBP and second video data to the sink device, where an auto low latency field included in the second VBP is a second value, and the second value indicates disablement of the auto low latency mode for the second video data. Correspondingly, the sink device receives the second VBP and the second video data that are sent by the source device.

In a possible implementation, a process in which the source device transmits the second VBP and the second video data to the sink device specifically includes: The source device transmits a second video frame to the sink device, where the second video frame includes at least one second VBP and a plurality of second active video packets AVPs, and the plurality of second AVPs are for carrying the second video data.

After the audio/video receiving adapter of the sink device receives the video stream, for the second video frame (including the second VBP and the second video data) in the video stream, when the auto low latency field included in the second VBP is the second value (that is, the value of the ALLM field is 0), the sink device performs S505.

S505: The sink device disables the auto low latency mode for the second video data.

With reference to the description of enabling the auto low latency mode by the sink device in the foregoing embodiment, when the sink device disables the auto low latency mode, the sink device resumes performing at least one processing for video picture quality enhancement that is suspended when the auto low latency mode is enabled, that is, reactivates one or more processing modules for video picture quality enhancement. For example, when the sink device enables the auto low latency mode, the sink device disables a processing module for resolution conversion and a processing module for contrast enhancement. When the sink device disables the auto low latency mode, the sink device reactivates the processing module for resolution conversion and the processing module for contrast enhancement, and adds processing for resolution conversion and contrast enhancement on video data, to improve video picture quality.

It can be learned from the foregoing content that, the source device sends a VBP in each video frame, and the VBP includes a field for an auto low latency mode. In this way, frame-level control on video data can be implemented, to dynamically enable or disable the auto low latency mode for a video frame.

It may be understood that, to implement functions in the foregoing embodiments, the source device and the sink device include corresponding hardware structures and/or software modules for performing the functions. A person skilled in the art should easily be aware that, in combination with the units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

The foregoing describes in detail the video transmission method provided in embodiments with reference to FIG. 1 to FIG. 9. The following describes a video processing apparatus provided in embodiments with reference to FIG. 10.

FIG. 10 is a diagram of a structure of a video processing apparatus according to an embodiment of this application. The video apparatus may be configured to implement a function of any device in the foregoing method embodiments, and therefore can also achieve beneficial effects of the foregoing method embodiments. In this embodiment, the video processing apparatus may be the set-top box 110, the smart television 120, or any display device shown in FIG. 1, or may be the source device 210 or the sink device 220 shown in FIG. 2, or may be a source device or a sink device provided in a subsequent embodiment. It should be understood that the video processing apparatus may alternatively be a module (for example, a chip) used in any one of the foregoing devices.

As shown in FIG. 10, the video processing apparatus includes a transceiver module 1001 and a processing module 1002. The transceiver module 1001 and the processing module 1002 may cooperatively implement the steps in the foregoing method embodiments. For more detailed descriptions of the transceiver module 1001 and the processing module 1002, directly refer to the related descriptions of the device in the method embodiments shown in the accompanying drawings. Details are not described herein again.

When the video processing apparatus implements, by software, the video transmission method shown in any one of the accompanying drawings, the video processing apparatus and units thereof may alternatively be software modules. A processor calls the software modules to implement the video transmission method. The processor may be a central processing unit (central processing unit, CPU), an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

It may be understood that the video processing apparatus shown in FIG. 10 is merely an example provided in embodiments. The video processing apparatus may include more or fewer units based on different video transmission processes. This is not limited in this application.

When the video processing apparatus is implemented by hardware, the hardware may be implemented by a processor or a chip system. The chip system includes one or more chips, and each chip includes an interface circuit and a control circuit. The interface circuit is configured to receive data from a device other than the chip and transmit the data to the control circuit, or send data from the control circuit to a device other than the chip. The control circuit and the interface circuit are configured to implement, by using a logic circuit or by executing code instructions, the method according to any one of the possible implementations in the foregoing embodiments. For beneficial effects, refer to the descriptions of any aspect in the foregoing embodiments. Details are not described herein again.

It may be understood that the processor in embodiments of this application may be a CPU, or may be another general-purpose processor, a digital signal processor (digital signal processor, DSP), an ASIC, an FPGA or another programmable logic device, a transistor logic device, a hardware component, or any combination thereof. The general-purpose processor may be a microprocessor, or may be any conventional processor.

The video processing apparatus shown in FIG. 10 may alternatively be implemented by a video processing device. FIG. 11 is a diagram of a structure of a video processing device according to this application. The video processing device includes a memory 1101 and at least one processor 1102. The processor 1102 may implement the video transmission method provided in the foregoing embodiments. The memory 1101 is configured to store software instructions corresponding to the video transmission method.

In an optional implementation, for hardware implementation, the video processing device may be a chip or a chip system that integrates one or more processors 1102. For example, when the video processing device is configured to implement the method steps in the foregoing embodiments, the processor 1102 included in the video processing device performs the steps of the source device in the foregoing methods and possible substeps thereof. In an optional case, the video processing device may further include a communication interface 1103, and the communication interface 1103 may be configured to send and receive data. For example, the communication interface 1103 is configured to receive audio/video data or send an audio/video stream. The communication interface 1103 may be implemented by an interface circuit included in the video processing device. Therefore, in some examples, the communication interface 1103 may also be referred to as a transceiver of the video processing device. In this embodiment, the communication interface 1103 supports a unified multimedia interconnection network.

In an embodiment of this application, the communication interface 1103, the processor 1102, and the memory 1101 may be connected through a bus 1104. The bus 1104 may be classified into an address bus, a data bus, a control bus, and the like. The bus 1104 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), cache coherent interconnect for accelerators (cache coherent interconnect for accelerators, CCIX), or another type of bus.

It should be noted that the video processing device may further perform the function of the video processing apparatus shown in FIG. 10. Details are not described herein again.

The video processing device provided in this embodiment may be the set-top box 110, the smart television 120, the source device 210, or another device with a video processing function. This is not limited in this application. For example, when the foregoing display devices also have a video processing function, the video processing device may be any one of the foregoing display devices.

In addition, the video processing apparatus shown in FIG. 10 may alternatively be implemented by a display device. When the video processing apparatus is implemented by the display device, embodiments provide a possible example, as shown in FIG. 12. FIG. 12 is a diagram of a structure of a display device according to this application. The display device includes: a processor 310, an interface 320 for external memory, an memory 321, a universal serial bus (universal serial bus, USB) interface 330, a unified multimedia interconnection interface 331, an antenna 1, an antenna 2, a mobile communication module 350, a wireless communication module 360, an audio module 370, a speaker 370A, a receiver 370B, a microphone 370C, a sensor module 380, a button 390, an indicator 392, a camera 393, a display screen 394, and subscriber identity module (subscriber identity module, SIM) card interfaces 1 to N 395, and the like.

The sensor module 380 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the display device. In some other embodiments, the display device may include more or fewer components than those shown in the figure, or some components may be combined, or some components may be split, or different component arrangements may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the display device. The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache. The memory can store instructions or data that has just been used or is cyclically used by the processor 310. If the processor 310 needs to use the instructions or data again, the processor may directly call the instructions or data from the memory. This avoids repeated access and reduces waiting time of the processor 310, thereby improving system efficiency.

In some embodiments, the processor 310 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a USB interface, a unified multimedia interconnection interface, and/or the like.

It may be understood that an interface connection relationship between the modules shown in this embodiment is merely used as an example for description, and does not constitute a limitation on the structure of the display device. In some other embodiments, the display device may alternatively use an interface connection manner different from that in the foregoing embodiment, or use a combination of a plurality of interface connection manners.

A wireless communication function of the display device may be implemented through the antenna 1, the antenna 2, the mobile communication module 350, the wireless communication module 360, the modem processor, the baseband processor, and the like. In some embodiments, in the display device, the antenna 1 is coupled to the mobile communication module 350, and the antenna 2 is coupled to the wireless communication module 360, so that the display device can communicate with a network and another device by using a wireless communication technology.

A wired communication function of the display device may be implemented through the USB interface 330 or the unified multimedia interconnection interface 331. For example, the display device receives or sends a video stream and an AVP packet through a bus connected to the unified multimedia interconnection interface 331.

The display device implements a display function by using the GPU, the display screen 394, the application processor, and the like. The GPU is a microprocessor for image processing, and is connected to the display screen 394 and the application processor. The GPU is configured to perform mathematical and geometric calculations, and is configured for graphics rendering. The processor 310 may include one or more GPUs that execute program instructions to generate or change display information.

The display screen 394 is configured to display an image, a video, and the like. The display screen 394 includes a display panel.

The display device may implement a photographing function through the ISP, the camera 393, the video codec, the GPU, the display screen 394, the application processor, and the like. The ISP is configured to process data fed back from the camera 393. The camera 393 is configured to capture a static image or a video. In some embodiments, the display device may include one or N cameras 393, where N is a positive integer greater than 1.

In this embodiment, the display screen 394, the video codec, the GPU, the display screen 394, the application processor, and the like may also be collectively referred to as a display unit of the sink device, and are configured to process and display a received video stream.

The interface 320 for external memory may be configured to connect to an external storage card, for example, a micro SD card, to extend a storage capability of the display device. The external storage card communicates with the processor 310 through the interface 320 for external memory, to implement a data storage function. For example, files such as music and videos are stored in the external storage card.

The memory 321 may be configured to store computer-executable program code, where the executable program code includes instructions. The processor 310 runs the instructions stored in the memory 321, to perform various function applications and data processing of the display device. For example, in an embodiment of this application, the processor 310 may execute the instructions stored in the memory 321. The memory 321 may include a program storage area and a data storage area.

The program storage area may store an operating system, an application required by at least one function (such as a sound playing function or an image playing function), and the like. The data storage area may store data (such as audio/video data or a phone book) created when the display device is used. In addition, the memory 321 may include a high-speed random access memory, and may further include a nonvolatile memory, for example, at least one magnetic disk storage component, a flash memory component, or a universal flash storage (universal flash storage, UFS).

The display device may implement an audio function, for example, music playing or recording, through the audio module 370, the speaker 370A, the receiver 370B, the microphone 370C, the application processor, and the like.

The button 390 includes a power button, a volume button, and the like. The button 390 may be a mechanical button, or may be a touch button. The indicator 392 may be an indicator light, and may be configured to indicate a charging status or a power change, or may be configured to indicate a message, a missed call, a notification, or the like.

All or some of the foregoing embodiments may be implemented by using software, hardware, firmware, or any combination thereof. When implemented by using a software program, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing descriptions of implementations allow a person skilled in the art to understand that, for the purpose of convenient and brief description, division into the foregoing functional modules is merely used as an example for illustration. During actual application, the foregoing functions may be allocated to different functional modules for implementation as required. In other words, an internal structure of the apparatus is divided into different functional modules to implement all or some of the functions described above. For a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, the division into the modules or units is merely logical function division and may be other division during actual implementation. For example, a plurality of units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

If the integrated unit is implemented in a form of a software functional unit and is sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the method according to embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A video transmission method, applied to a source device or a chip in the source device, wherein the method comprises:
querying a capability of a sink device; and
transmitting a first vertical blanking packet VBP and first video data to the sink device when the sink device has an auto low latency capability, wherein an auto low latency field comprised in the first VBP is a first value, and the first value indicates enablement of an auto low latency mode for the first video data.

2. The method according to claim 1, wherein the method further comprises:
transmitting a second vertical blanking packet VBP and second video data to the sink device, wherein an auto low latency field comprised in the second VBP is a second value, and the second value indicates disablement of the auto low latency mode for the second video data.

3. The method according to claim 1 or 2, wherein transmitting the first VBP and the first video data to the sink device comprises:
transmitting a first video frame to the sink device, wherein the first video frame comprises at least one first VBP and a plurality of first active video packets AVPs, and the plurality of first AVPs are for carrying the first video data.

4. The method according to claim 2 or 3, wherein transmitting the second VBP and the second video data to the sink device comprises:
transmitting a second video frame to the sink device, wherein the second video frame comprises at least one second VBP and a plurality of second active video packets AVPs, and the plurality of second AVPs are for carrying the second video data.

5. A video transmission method, applied to a sink device or a chip in the sink device, wherein the method comprises:
receiving a first vertical blanking packet VBP and first video data that are sent by a source device; and
enabling an auto low latency mode for the first video data when an auto low latency field comprised in the first VBP is a first value.

6. The method according to claim 5, wherein the method further comprises:
receiving a second vertical blanking packet VBP and second video data that are sent by the source device; and
disabling the auto low latency mode for the second video data when an auto low latency field comprised in the second VBP is a second value.

7. The method according to claim 5 or 6, wherein receiving the first vertical blanking packet VBP and the first video data that are sent by the source device comprises:
receiving a first video frame sent by the source device, wherein the first video frame comprises at least one first VBP and a plurality of first active video packets AVPs, and the plurality of first AVPs are for carrying the first video data.

8. The method according to claim 6 or 7, wherein receiving the second vertical blanking packet VBP and the second video data that are sent by the source device comprises:
receiving a second video frame sent by the source device, wherein the second video frame comprises at least one second VBP and a plurality of second active video packets AVPs, and the plurality of second AVPs are for carrying the second video data.

9. A video processing device, comprising a memory, a transceiver, and a processor, wherein the memory, the transceiver, and the processor are configured to cooperatively perform the method according to any one of claims 1 to 4.

10. A sink device, comprising a transceiver and a processing unit, wherein the transceiver and the display unit are configured to cooperatively perform the method according to any one of claims 5 to 8.

11. A computer-readable storage medium, storing computer instructions, wherein when the computer instructions are run on a compute device, the method according to any one of claims 1 to 4 or the method according to any one of claims 5 to 8 is performed.
